# EUROPEAN PATENT SPECIFICATION

(11) **EP 3 331 408 B1**
(45) Date of publication and mention of the grant of the patent: **09.10.2019**
(21) Application number: 16766618.9
(22) Date of filing: 02.08.2016
(51) Int. Cl.: A47J 37/07, A47J 37/06, A47J 37/04

(54) **BARBECUE**
GRILL
BARBECUE

(30) Priority: 04.08.2015 IT UB20152832
(43) Date of publication of application: 13.06.2018
(73) Proprietor: Attrezzeria Universal S.r.l., 46029 Suzzara (MN) (IT)
(72) Inventor: CARAMASCHI, Armando, 46029 Suzzara (MN) (IT)
(74) Representative: Cicconetti, Andrea
(86) International application number: PCT/IB2016/054649
(87) International publication number: WO 2017/021887

(56) References cited:
- US-A- 4 535 750
- US-A- 5 598 769
- US-A1- 2002 108 500
- US-A1- 2005 051 152
- US-A1- 2014 328 990

## Description

The invention concerns cooking apparatuses to roast and cook food outdoors and particularly, it concerns a portable barbecue having grill and/or spit.

Several types of barbecues are known, namely stoves provided with grill on which to cook food, such as meat and fish, by using the heat generated by burning charcoal, firewood or a gas. In the barbecue, the grill supporting the food is arranged over the heat source in order to be directly hit by the combustion flames or the thermal radiation, for example, by the heat generated by the embers formed burning charcoal or firewood.

There exist also electrical barbecue in which electrical thermo-resistors are provided, placed under the grill to generate the heat needed for the cooking.

Cooking food by means of grill, namely the barbecue cooking technique, allows obtaining cooked food having less fat content, since the latter separate and drip from food after liquefying during the cooking. However, cooking with the known barbecues requires a lot of care since food, especially when directly hit by the flames, can easily burn and, particularly in case of meat, the contact with flames and/or high cooking temperatures can lead to form dangerous carcinogenic elements (heterocyclic amines, aromatic polycyclic hydrocarbons, etc.).

To ensure a uniform cooking of the food, it is therefore needed to often and periodically turn and move the food on the grill in order to cook both its sides. In case of double grills holding and surrounding the food, it is needed to constantly turn the latter.

In the charcoal or firewood barbecues, it is also needed to check that the food is not, or it is only partially, hit by the combustion fumes, which could modify its taste.

Therefore, cooking by means of known barbecues is rather laborious and requires the user to be constantly present and attentive in order to obtain a proper and suitable cooking of the food.

Another disadvantage of the known barbecues is that they generate a lot of heat particularly in front of and around the grill, and that requires their placement outdoors and preferably in conveniently ventilated areas.

One object of the present invention is to improve the known barbecues, particularly the portable barbecues with grill means and/or spit means.

Another object is to realize a barbecue allowing cooking the food in a substantially automatic manner, without the need for manual interventions by the user during cooking.

A further object is to obtain a barbecue allowing an optimal food cooking, free from combustion fumes and allowing precisely controlling the cooking temperature and duration.

Yet another object is to obtain a safe, reliable and easy to use barbecue.

Another further object is to realize a barbecue being easily cleanable and washable after cooking the food.

Yet a further object is to provide a barbecue limiting the heat dispersion and being able to be used in a safe manner also in not very ventilated spaces.

Those and other objects are achieved by a barbecue according to one or more of the claims below.

The invention will be better understood and carried out with reference to the attached drawings, which illustrate its exemplary and non-limiting embodiment, wherein:
- figure 1 is a front view of the barbecue of the invention;
- figure 2 is a cross-section along line II-II of figure 1 showing ceramic radiating means and supporting elements of grill means (not shown) in a rearward position;
- figure 3 is a cross-section along line III-III of figure 1 showing grill means in an operating configuration;
- figure 4 is a cross-section along line IV-IV of figure 1 showing supporting means of the grill means (not shown);
- figure 5 is a cross-section like the one of figure 3 showing a door in an open position and the grill means in another operating configuration;
- figure 6 is a cross-section like the one of figure 4 showing the door in an open position and the supporting elements in an advanced position;
- figure 7 is a cross-section along line VII-VII of figure 6;
- figure 8 is a top plan view of the barbecue of figure 1 with the door in an open position;
- figure 9 is an enlarged detail of figure 7 showing supporting and moving means of the grill means (not shown);
- figure 10 is an enlarged detail of figure 4 showing a supporting element of the grill means (not shown) and first moving means;
- figure 11 is a front view of the barbecue of the invention associated with a moving trolley and with the door in open position;
- figure 12 is a top plan view of grill means of the barbecue of the invention in an open configuration;
- figure 13 is a front view of the grill means of figure 12 in a closed configuration;
- figure 14 is a lateral view of the grill means of figure 13;
- figure 15 is a front view of spit means of the barbecue of the invention.

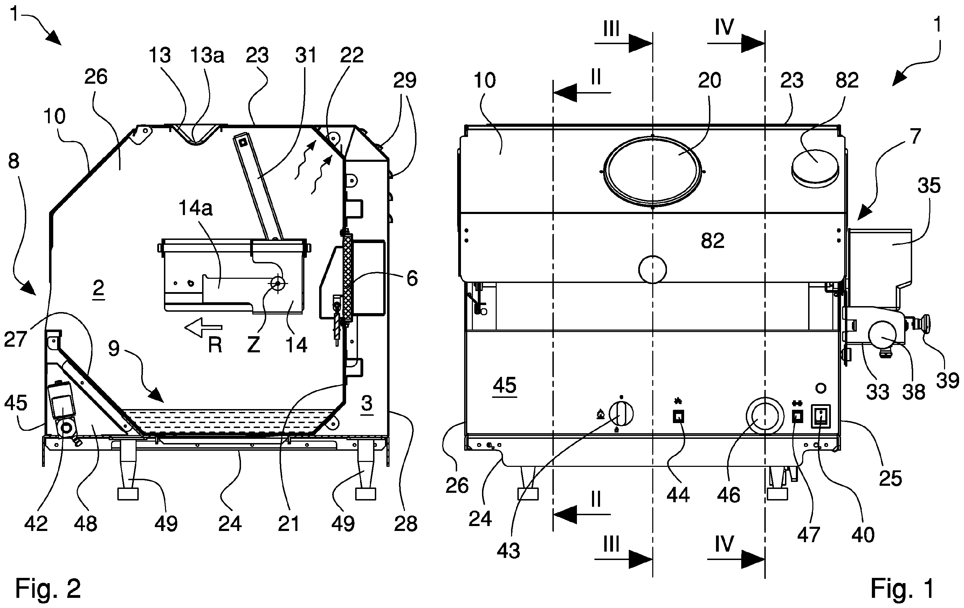

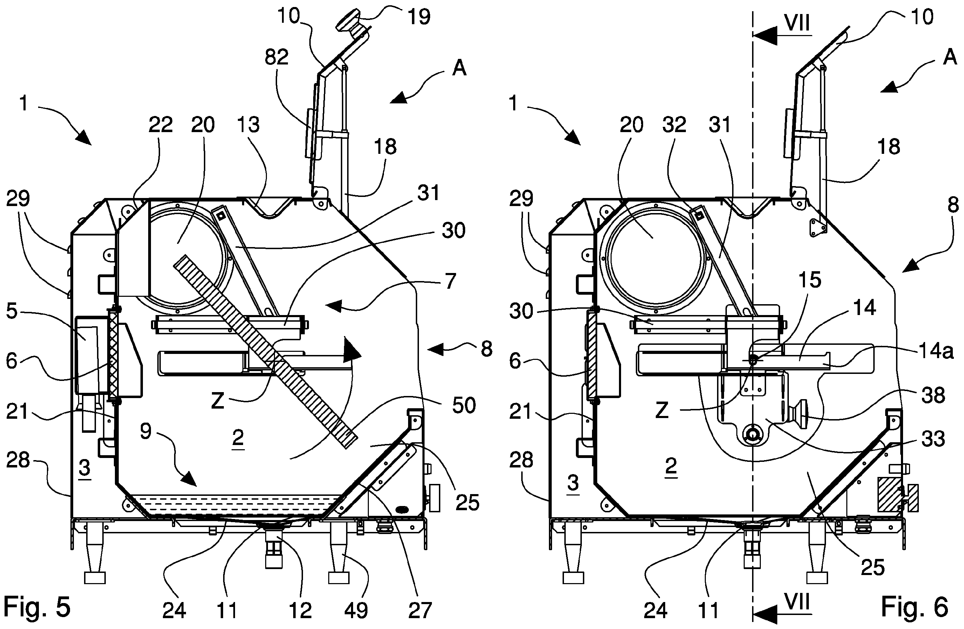

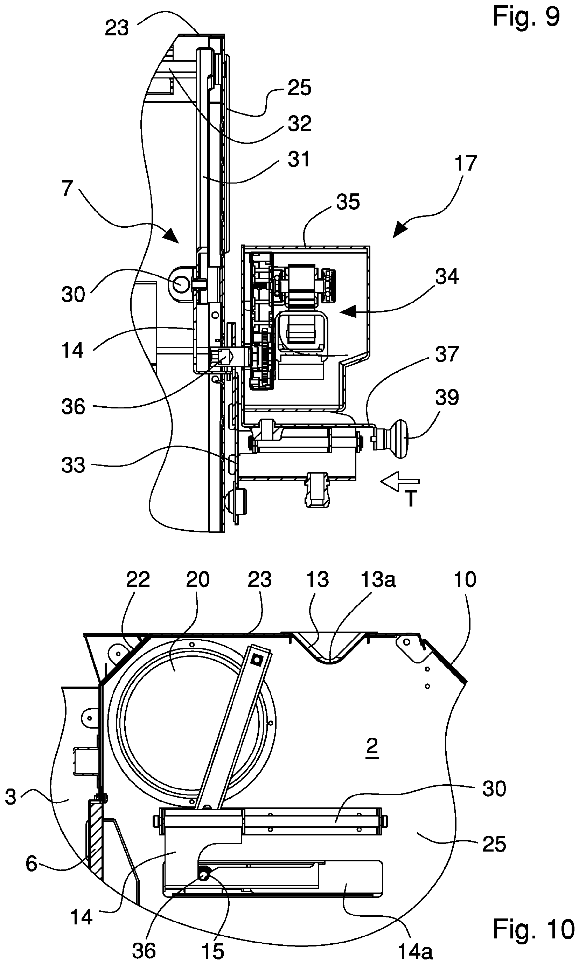

Referring to figures 1 to 10, a barbecue is shown provided with grill means 50 and/or spit means 70 to cook food and comprising a cooking chamber 2 substantially closed and provided with a front access opening 8 closable, at least partially, by means of a door 10 and a ventilation chamber 3 divided from the cooking chamber 2 by means of a dividing wall 21 of the cooking chamber 2. The ventilation chamber 3 is arranged to house heating means 5 and it is connected to the external environment by means of a plurality of top openings 29 to let at least the cooking heat exit.

The dividing wall 21 is a rear wall of the cooking chamber 2, particularly being substantially vertical and it is opposite to the front access opening 8, the ventilation chamber 3 therefore being arranged at the back of the cooking chamber 2 with reference to the above-mentioned front access opening 8.

The barbecue 1 is provided with ceramic radiating means 6 inserted in the dividing wall 21 and connected to the heating means 5 in order to transmit and radiate in the cooking chamber 2 the heat generated by the heating means 5.

Particularly, the heating means 5 comprise burner means supplied by a combustible gas, such as natural gas or liquefied petroleum gas (butane, propane), and able to generate heat by burning the above-mentioned gas. In that case, the top openings 29 of the ventilation chamber 3 allow the disposal and escape also of the combustion gases.

The heating means 5 and the ceramic radiating means 6 can be integrated in a single unit, for example an incandescent ceramic emitter, of a known type and not described in detail. Alternatively, the heating means 5 can comprise electrical thermo-resistors associated to the ceramic radiating means.

The barbecue 1 of the invention also includes supporting and moving means 7 adapted to support the grill means 50 and/or spit means 70 and arranged to move both along a regulating direction R, near to or far from the ceramic radiating means 6, and to rotate the grill means 50 and/or spit means 70 about respective transversal axes Z, Z', for example during the food cooking, as it will be better explained in the following description.

In the embodiment shown in the figures, the cooking chamber 2 is substantially box-shaped and it comprises, in addition to the rear dividing wall 21, a top wall 23, a bottom wall 24, opposite to the top wall 23, a pair of lateral walls 25, 26, almost parallel and opposite to each other, and a front wall 27 defining the front access opening 8.

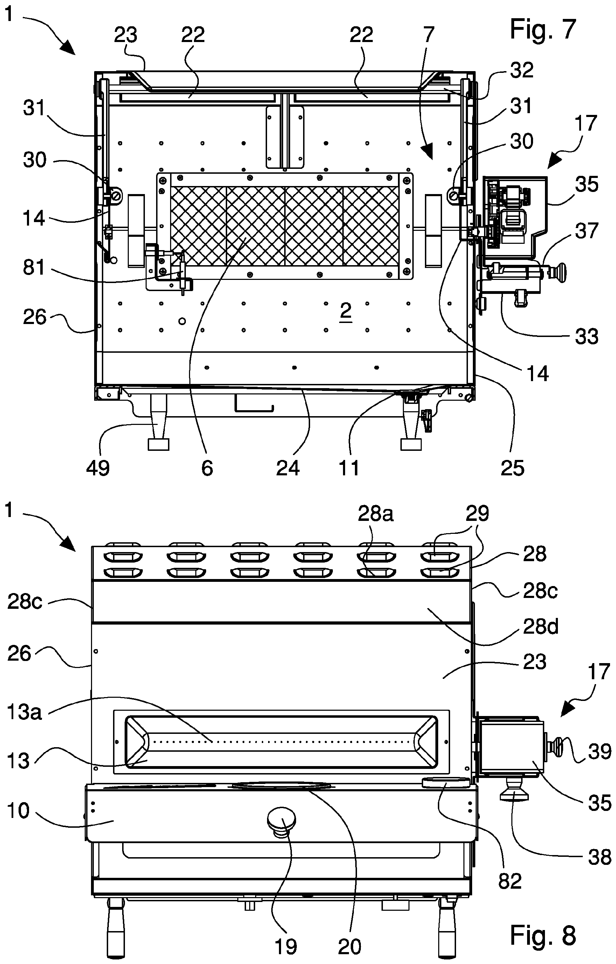

The barbecue comprises one or more ventilation openings 22, two for example, realized on the dividing wall 21 at the top wall 23, and communicating with the ventilation chamber 3 to let the cooking fumes and the heat exit from the cooking chamber 2. The ventilation openings 22, for example having an elongated rectangular shape (figure 7), are realized on a tilted top portion of the dividing wall 21, connected to the top wall 23.

In one version of the barbecue not shown in the figures, the ventilation openings 22 are realized on the top wall 23 and they directly communicate with the external environment in order to allow the cooking fumes and the heat to exit the cooking chamber 2.

In another version of the barbecue not shown in the figures, respective substantially vertical ducts or chimneys are associated to the ventilation openings 22 realized on the top wall 23, which convey, also due to the natural ventilation, the cooking fumes and the heat from the cooking chamber 2 directly in the external environment.

The bottom wall 24 in cooperation with the dividing wall 21, the lateral walls 25, 26 and the front wall 27 forms a bottom tray 9 suitable to contain water and/or cooking liquids. The bottom tray 9 is provided with a drain opening 11 closed by a respective plug 12 which allows its emptying and possible washings.

The ventilation chamber 3 of the barbecue is formed by the rear dividing wall 21 of the cooking chamber 2 and by a covering carter 28 able to be removably coupled to the cooking chamber 2. In particular, the covering carter 28 comprises a respective rear wall 28a parallel and opposite to the dividing wall 21, a respective bottom wall 28b parallel and fixed to the bottom wall 24 of the cooking chamber 2, a pair of respective lateral walls 28c parallel and opposite to each other and a respective top wall 28d, provided with a flat portion parallel to the top wall 23 of the cooking chamber and a tilted portion.

On the covering carter 28, at one top portion thereof, namely being adjacent to the top wall 28d of the above-mentioned carter, the top openings 29 are realized to let the heat and the combustion fumes exit.

On the covering carter 28, at the bottom wall 28d and/or at portions of the lateral walls 28c adjacent to the bottom wall 28d, also one or more bottom openings can be provided for the air inlet, for example the air needed for the operation of the heating means 5.

The covering carter 28 can be easily removed and reassembled in order to allow maintenance operations on the heating means 5, namely on the entire ceramic emitting unit.

The door 10 is hinged to engaging portions of the lateral walls 25, 26 in order to rotate about a transversal axis, particularly orthogonal to the above-mentioned lateral walls, between an opening position A, wherein it is risen in order to free the front access opening 8, and a closure position B wherein it is lowered in order to close at least partially the front access opening 8.

A pair of pneumatic or spring pistons 18 keeps the door 10 in the opening position A and slows the closing movement. The door 10 is also provided with a porthole 20 for the visual inspection of the cooking chamber 2 and with a respective knob 19 to allow an operator to open/close it. The knob 19 of the door 10 is made of a thermal insulating material, for example wood or silicone, in order not to require the user to use insulating gloves.

Further inspection portholes 20 are provided also on the lateral walls 25, 26 of the cooking chamber 2.

The supporting and moving means 7 comprise a pair of supporting elements 14 slidingly fixed to the lateral walls 25, 26 of the cooking chamber 2 and arranged to rotatably receive the opposite ends of a rotational rod 53 of the grill means 50 or the opposite ends of a respective rotational rod 73 of the spit means 70. The supporting and moving means 7 also include first moving means 31, 32 allowing integrally moving the supporting elements 14 together along the regulating direction R, in order to move close or move away the grill means 50 to/from the ceramic radiating means 6. The first moving means 31, 32 are able to move the supporting elements 14, and therefore the grill means 50 or the spit means 70, in a continuous manner, namely in a (theoretically infinite) plurality of different positions along the regulating direction R and with respect to the ceramic radiating means 6.

Each supporting element 14 comprises a portion 14a protruding towards the front access opening 8 and arranged to receive and guide a respective end 53a, 53b of said rotational rod 53 in an open housing seat 15. The protruding portions 14a help inserting or extracting the grill means 50 and/or the spit means 70 from the cooking chamber 2.

Each supporting element 14 is slidingly fixed to the respective lateral wall 25, 26 by means of a respective linear guide 30, for example in the shown embodiment, made from a cylindrical pipe fixed to the lateral wall 25, 26 by means of a bracket and on which two sliding flanges of the supporting element 14 engage. The two supporting elements 14 are connected to each other by the first moving means, which include a pair of levers 31 each of them being rotatably fixed at one first end to the respective supporting element 14. The second ends of the levers 31 are rigidly connected to each other by a connecting rod 32. In that way, by moving one of the two supporting elements 4 along the regulating direction R, also the other supporting element 4 moves in an integral way.

In the shown embodiment, looking at the barbecue 1 from the front, the supporting element 14 associated to the right lateral wall 25 is fixed to and supports a first external bracket 33 through a dedicated slot realized on the right lateral wall 25. The first bracket 33 is provided with a respective knob 38, which allows an operator to move the above-mentioned external bracket 33 and therefore the supporting element 14 sustaining it, along the regulating direction R.

The supporting and moving means 7 also comprise second moving means 17 which allow rotating the grill means 50 and/or the spit means 70 about the transversal axis Z, Z'. Particularly, the second moving means 17 are slidingly supported by the first bracket 33 and they can be coupled to one end 53a of a rotational rod 53 of the grill means 50.

The second moving means 17, in the shown embodiment, comprise driving means 34, particularly being contained inside a respective casing 35, arranged to rotate a driving bush 36, being able to engage the end 53a, 73a of the rotational rod 53, 73. The driving means 34, for example, include a rotating electrical motor, which moves the driving bush 36 by means of speed reduction means, for example comprising a plurality of gears. The rotational speed of the electrical motor can be fixed or adjustable.

The casing 35 of the second moving means 17 is fixed to a second bracket 37 slidingly connected to the first bracket 33 in order to slide along an insertion direction T being almost parallel to the rotational rod 53, namely to the transversal rotational axis Z, and orthogonal to the regulating direction R. The second bracket 37 is provided with a respective knob 39 which allows the user to manually move the second bracket 37, namely the second moving means 17, along the insertion direction T between an insertion position and a rearward position, respectively, in order to engage or disengage the rotational rod 53, 73 of the grill means 50 or the spit means 70 to/from the driving bush 36.

The barbecue 1 of the invention can be provided also with at least one tray 13 fixed in a easily removable way to the top wall 23 of the cooking chamber 2 and provided with a plurality of distribution holes 13a able to dispense a typically fluid or liquid food from above, inside the cooking chamber 2 and on the cooking food arranged on the grill means 50 and/or the spit means 70, for example rotating therewith. The tray 13 is inserted in a respective transversal through opening realized on the top wall 23, near the front access opening 8.

The top wall 23, heated by the heat existing in the cooking chamber 2, can be advantageously used as a food cooking or heating surface, for example to toast bread and the like. A lid can be provided to form a cooking space with the top wall 23.

A temperature sensor 81, comprising, for example, a thermocouple, is provided to detect the operating temperature of the heating means 5 and it is placed inside the cooking chamber 2, next to the ceramic radiating means 6. A further temperature sensor 82 is placed on the door 10 to detect the temperature inside the cooking chamber 2 during the cooking process.

The temperature sensors 81, 82 allow monitoring both the regular operation of the heating means 5 and the temperature inside the cooking chamber 2 in order to act, if needed, on the heating means 5 during the cooking process.

For that purpose, control means 42, 43 are provided to adjust the heat generated by the heating means 5. Particularly, when the latter comprise gas supplied burner means suitable to generate heat by burning said gas, the control means comprise one or more supply valves 42 and a stopcock 43 to intercept the gas flow from a supply tank, typically a gas cylinder, to the burner means 5. The gas lighting flame in the burner means 5 is activated by means of a respective lighting button 44, which activates a lighting plug.

The gas supply valves 42 are arranged in a front space 48 of the barbecue defined by the front wall 27 of the cooking chamber 2 and a front panel 45. On the front panel 45, there are mounted the gas stopcock 43, the lighting button 44, timing means 46 at least controlling the turning off of the burner means 5 after a preset time interval, an activation button 47 of the second moving means 17 (rotation of the grill means 50 or the spit means 70 about the axis Z, Z'), and a main switch 40 to completely turn the barbecue 1 off.

The timing means 46 can also activate the lighting of the burner means 5, in order to define the cooking time and/or the start of the cooking process. The timing means 46, for example, allow executing a programmed lighting so that the barbecue 1 of the invention starts the cooking process also without the user being present.

The timing means 46 can further control, separately if need be, the activation and/or deactivation of the second moving means 17, namely they can control the rotation of the grill means 50 or the spit means 70 about the axis Z, Z'. For example, the rotation of the grill means 50 or the spit means 70 can be activated after a certain time interval from the lighting of the burner means 5, particularly when a preset temperature is reached inside the cooking chamber 2.

In the embodiment shown in the figures 1 to 10, the barbecue 1 of the invention comprises a plurality of supporting feet 49, for example four, fixed to the bottom wall 24 of the cooking chamber 2, which allow to lay the barbecue 1 down on a flat surface, for example a table.

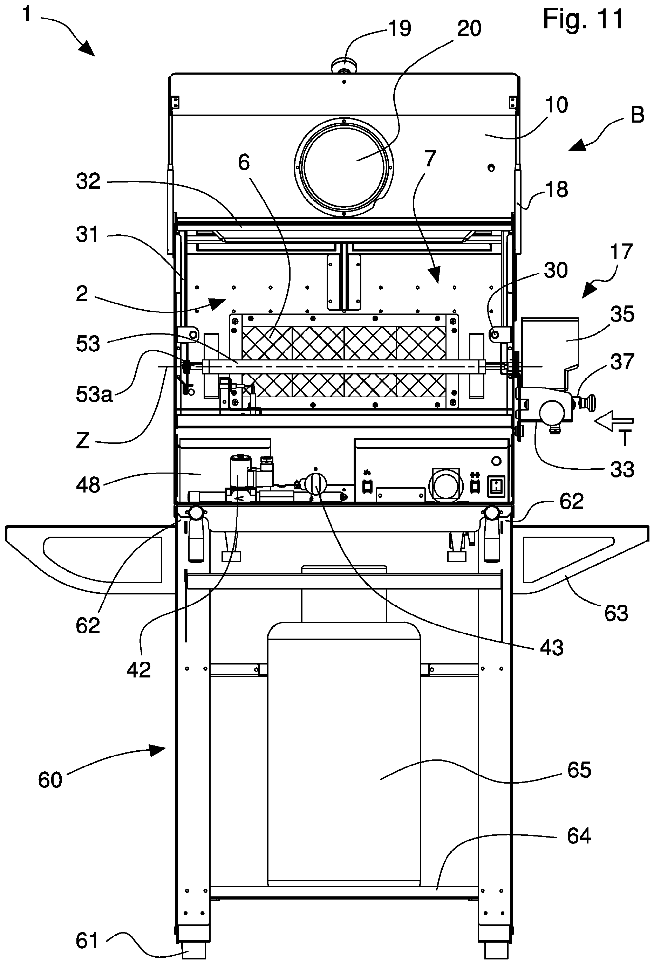

Alternatively, as shown in figure 11, the barbecue 1 of the invention can be associated and laid down on a trolley 60, provided with wheels 61 and supporting portions 62 for the bottom wall 24 of the cooking chamber 2. The trolley 60 also comprises one or more supporting shelves 63 and a space 64 to house a gas supply tank 65 for said burner means 5.

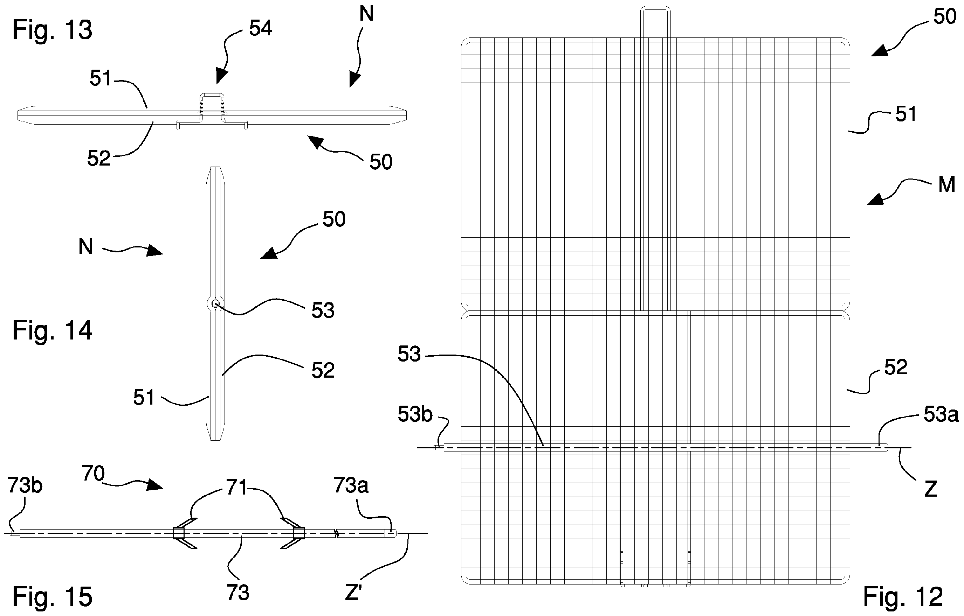

Particularly referring to figures 12 to 14, the grill means 50, for example, comprise a first upper grill 51 and a second lower grill 52 hinged to each other along one side having the greatest length in order to be able to rotate with respect to each other between an open configuration M to allow introducing the food to be cooked and a closed configuration N wherein the two grills 51, 52 are facing and hold the food. Closure means 54 allow blocking the grill means 50 in a firm, but reversible way in the closed configuration N. The rotational rod 53, for example, is fixed to the second grill 52 substantially at its middle and comprises a first end 53a arranged in order to couple with the second moving means 17 and a second end 53b arranged in order to engage the seat 15 of the supporting element 14 fixed to the left lateral wall 26.

The grill means 50 can be provided with a handle made of insulating material fixed to at least one of the two grills 51, 52 to allow handling by a user, namely the easy insertion and extraction into/from the barbecue 1.

Figure 15 shows spit means 70 usable in the barbecue 1 of the invention in place of the grill means 50 in order to cook particular food, for example poultry, game, etc. The spit means 70 substantially comprise a respective rotational rod 73 on which a plurality of forks 71 is mounted to block the food. Also the rotational rod 73 of the spit means 70 comprises a first end 73a arranged to couple with the second moving means 17 and a second end 73b arranged to engage the seat 15 of the supporting element 14 fixed to the left lateral wall 26. Using the barbecue 1 of the invention, for example with the grill means 50, considers that the latter, after being loaded with the food to be cooked, are inserted inside the cooking chamber 2. The insertion is easy and quick because the ends 53a, 53b of the rotational rod 53 can be laid on the protruding portions 14a of the supporting elements 14, which helps their progressive insertion inside until engaging the respective open seats 15.

The second moving means 17, arranged in the rearward position, therefore are moved by the user along the insertion direction T in order to allow the driving bush 36 to engage the first end 53a of the rotational rod. The user acts by grabbing the knob 39 of the second bracket 37.

Then the grill means 50 can be rotated about the transversal rotational axis Z or be simply arranged and blocked in a predefined static position (horizontal, vertical, tilted) to cook the food.

By acting on the knob 38 of the first bracket 33, the user can move the supporting elements 14, being connected to each other by the first moving means 31, 32, along the regulating direction R in order to move close or move away the grill means 50 to/from the ceramic radiating means 6 as a function of type and quantity of food to be cooked.

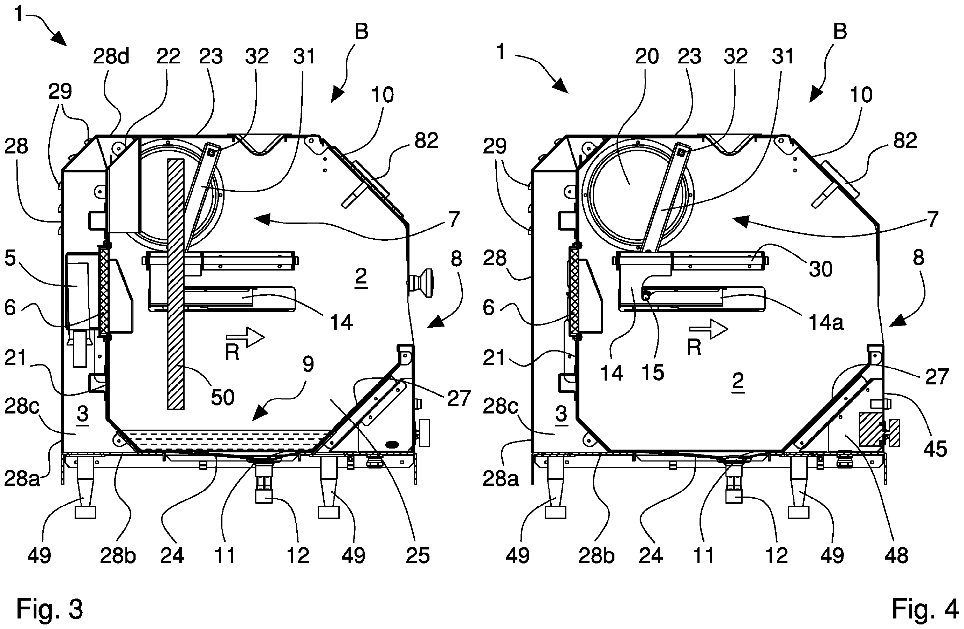

As shown in figure 3, the grill means 50 can be arranged in a vertical position next to the ceramic radiating means 6 in order to cook the food interposed and enclosed between the two grills 51, 52, then they can be moved away, rotated by 180° and placed again next to the ceramic radiating means 6 for a uniform and regular cooking of the food.

The grill means 50 can also be rotated at a constant speed about the transversal rotational axis Z always to ensure a uniform cooking without manual intervention by the user.

That kind of cooking in particular is used in case of the spit means 70 used, as known, to cook poultry or big pieces of meat.

Water can be introduced inside the bottom tray 9, which allows to cool the fats melted from food and to avoid they accumulate and adhere to the bottom wall 24 of the cooking chamber 2 burning and generating smoke. Therefore, the bottom tray 9 filled with water allows cooking without smoke and allows a following and more simple cleaning of the barbecue. After use, it is then enough to remove the plug 12 from the drain opening 11 of the tray 9 and to eliminate the water therein and the further washing water.

The bottom tray 9 can also be used to recover a fluid food, butter for example, which is dispensed by the tray 13 through the holes 13a and thus distributed on the food that is cooking on the grill means 50 or the spit means 70.

Therefore, thanks to the barbecue of the invention, it is possible to cook the food on grill or spit substantially in an automatic manner, without the need of manual interventions by the user during cooking. Actually, the grill 50 or spit 70 are rotated about the respective rotational rod 53, 73 by the second moving means 17 in order to guarantee a uniform and regular cooking of the food. The activation and/or deactivation of the second moving means 17 can be executed in an automatic and programmed manner by the timing means 46 or it can be executed manually, by blocking the grill 50 or the spit 70 in one defined angular position.

Also the cooking time, namely the turning on and/or turning off of the burner means 5, can be adjusted and controlled by the timing means 46, while the temperature sensors 81, 82 allow controlling both the regular operation of the heating means 5 and the temperature inside the cooking chamber 2, in order to act, if needed, on the heating means 5 during the cooking process, for example by acting on the gas supply stopcock 43. Particularly, the temperature sensor 81 interrupts the operation of the burner means by sending a proper alarm signal to the control means 42, 43 in case the detected temperature is excessive and dangerous for the barbecue integrity and the users' safety.

It is considered that the temperature sensor 81 can be connected to a control unit able to manage the supply valves 42 in order to adjust the gas supply, namely the combustion, as a function of the temperature detected according to a closed loop control system.

It is worth noticing that the cooking temperature and/or the quantity of cooking heat can be adjusted also by varying the distance of the grill means 50 or the spit means 70 from the ceramic radiating means 6 as desired by acting on the supporting and moving means 7 namely by moving the supporting elements 14 along the regulating direction R. The grill means 50 and the spit means 70 can be rotated or stopped in desired positions (for example, in order to locally concentrate the cooking).

Therefore, the barbecue 1 of the invention allows realizing an optimal cooking of the food, since it is possible to precisely control the temperature and duration of the cooking. Thanks to the bottom tray 9 filled with water, which collects the fat dripping from food, it is also possible to have a cooking without smoke.

The bottom tray 9 also allows an easy cleaning of the barbecue 1 once ended using it, because the grill means 50 and spit means 70 are quickly and easily disassembled from the barbecue 1 and separately washed, for example in a dishwasher.

An easier cleaning of the barbecue 1 is possible because the ventilation chamber 3 is arranged at the back of the cooking chamber 2, the dividing wall 21 being a rear vertical wall of the cooking chamber 2 itself, which is partially hit by the cooking fumes and vapors of the food. In that way, the ceramic radiating means 6, inserted in the dividing wall 21, get dirty in a limited manner and they can be cleaned more easily and quickly. Moreover, the vertical arrangement at the back of the ventilation chamber 3 provided with bottom openings for the passage and inlet of the air and with top openings 29 for the disposal and exit of the heat and/or the combustion fumes, ensures an optimal dispersion of the heat not used to heat the cooking chamber 2. Particularly, the chimney effect or the natural ventilation realized inside the ventilation chamber 3 allow to quickly and efficiently dispose of the excess heat and/or the combustion fumes preventing an excessive heating of the barbecue walls for a greater safety of the operator and/or user.

Eventually, the backward arrangement of the ventilation chamber 3, namely of the dividing wall 21, allows also using the top wall 23 of the cooking chamber 2 not only to cook or heat food, but also to receive at least one tray 13 being able to dispense from above a typically fluid or liquid food inside the cooking chamber 2 and on the food being cooked arranged on the grill means 50 and/or the spit means 70, for example rotating therewith.

The cooking chamber 2, substantially closed and connected at the back to the ventilation chamber 3 or directly to the outside to let the heat exit through the openings 22, allows controlling and limiting the heat dispersion of the barbecue of the invention in the surrounding environment, allowing its safe use also in poorly aerated or ventilated spaces.

## Claims

1. Barbecue provided with grill means (50) and/or spit means (70) to cook food, comprising a cooking chamber (2) substantially closed and provided with a front access opening (8) closable, at least partially, by means of a door (10) and a ventilation chamber (3) divided from said cooking chamber (2) by means of a dividing wall (21) of said cooking chamber (2), said ventilation chamber (3) being arranged to house heating means (5) and connected to an external environment by means of a plurality of top openings (29) to let at least the cooking heat exit, said barbecue comprising ceramic radiating means (6) inserted in said dividing wall (21) and connected to said heating means (5) in order to transmit and radiate in said cooking chamber (2) the heat generated by said heating means (5) and supporting and moving means (7) adapted to support said grill means (50) and/or said spit means (70), **characterized in that** said dividing wall (21) is a rear wall of said cooking chamber (2) that is opposed to said front access opening (8), said ventilation chamber (3) being arranged at the back of said cooking chamber (2) with reference to said front access opening (8), and **in that** said supporting and moving means (7) are arranged to move said grill means (50) and/or said spit means (70) in a continuous manner along a regulating direction (R), near to or far from said ceramic radiating means (6), and to rotate said grill means (50) and/or said spit means (70) about a respective transversal rotational axis (Z; Z') in order to adjust and control the food cooking.

2. Barbecue according to claim 1, wherein said supporting and moving means (7) comprise a pair of supporting elements (14) slidingly fixed to opposite lateral walls (25, 26) of said cooking chamber (2) and arranged to rotatably receive a rotational rod (53; 73) of said grill means (50) and/or of said spit means (70) and first moving means (31, 32) to move said supporting elements (14) along said regulating direction (R) in order to move close or move away said grill means (50) and/or said spit means (70) to/from said ceramic radiating means (6).

3. Barbecue according to claim 2, wherein each supporting element (14) comprises a portion (14a) protruding towards said access opening (8) and arranged to receive and guide a respective end (53a, 53b; 73a, 73b) of said rotational rod (53; 73) in an open housing seat (15) of said supporting element (14).

4. Barbecue according to claim 2 or 3, wherein said supporting and moving means (7) comprise a first external bracket (33) fixed to one of the supporting elements (14) through a slot realized on a respective lateral wall (25) of the cooking chamber (2) and provided with a respective knob (38) to allow a user to move said first bracket (33) and said supporting elements (14) along said regulating direction (R).

5. Barbecue according to any claim from 2 to 4, wherein said supporting and moving means (7) comprise second moving means (17) able to be coupled to one end (53a) of said rotational rod (53; 73) of said grill means (50) and/or said spit means (70) in order to rotate the latter about said transversal axis (Z; Z'), in particular said second moving means (17) being connected to one of the two supporting elements (14).

6. Barbecue according to claim 5, when depending on claim 4, wherein said first bracket (33) slidingly supports said second moving means (17) that are movable along an insertion direction (T) between an insertion position and a rearward position in order to engage or disengage said rotational rod (53; 73) of said grill means (50) and/or said spit means (70), respectively.

7. Barbecue according to claim 5 or 6, wherein said second moving means (17) comprise driving means (24), particularly contained inside a respective casing (35), and arranged to rotate a driving bush (36) arranged to engage an end (53a; 73a) of said rotational rod (53; 73), particularly said second moving means (17) being fixed to a second bracket (37) slidingly connected to a first bracket (33) fixed to one of the supporting elements (14).

8. Barbecue according to any preceding claim, wherein said dividing wall (21) is substantially vertical.

9. Barbecue according to any preceding claim, comprising at least one ventilation opening (22) realized on said dividing wall (21) and/or a top wall (3) of said cooking chamber (2) in order to allow exiting cooking fumes and heat therefrom.

10. Barbecue according to any preceding claim, wherein said cooking chamber (2) comprises a bottom wall (24), a top wall (23), a pair of opposite lateral walls (25, 26) and a front wall (27), said bottom wall (24) in cooperation with said dividing wall (21), said lateral walls (25, 26) and said front wall (27) forming a bottom tray (9) suitable to contain water and/or cooking liquids and provided with a drain opening (11), being closable by a respective plug (12).

11. Barbecue according to any preceding claim, comprising a temperature sensor (81) to detect an operating temperature of said heating means (5) and/or said ceramic radiating means (6) and a further temperature sensor (82) to detect a temperature inside said cooking chamber (2).

12. Barbecue according to any preceding claim, comprising control means (42, 43) to adjust the heat being generated by said heating means (5).

13. Barbecue according to any preceding claim, comprising timing means (46) to control turning on and/or turning off said heating means (5), particularly to define a cooking time and/or the start of the cooking process.

14. Barbecue according to any claim from 5 to 7, comprising timing means (46) to control enabling and/or disabling of said second moving means (17).

15. Barbecue according to any preceding claim, wherein said heating means (5) comprise gas supplied burner means suitable to generate heat by burning said gas, particularly said gas burner means (5) and said ceramic radiating means (6) being integrated in an incandescent ceramic emitting unit.

## Patentansprüche

1. Grillvorrichtung, die mit Grillmitteln (50) und/oder Spießmitteln (70) zum Kochen von Essen versehen ist, umfassend eine Kochkammer (2), die im Wesentlichen geschlossen ist und mit einer vorderen Zugriffsöffnung (8) versehen ist, die zumindest teilweise durch Mittel einer Tür (10) schließbar ist, und eine Ventilationskammer (3), die von der Kochkammer (2) durch Mittel einer Trennwand (21) der Kochkammer (2) getrennt ist, wobei die Ventilationskammer (3) angeordnet ist, um Heizmittel (5) unterzubringen und mit einer externen Umgebung durch Mittel einer Mehrzahl von oberen Öffnungen (29) verbunden ist, um zumindest die Kochhitze austreten zu lassen, wobei die Grillvorrichtung keramische Strahlmittel (6), die in die Trennwand (21) eingesetzt sind und mit den Heizmitteln (5) verbunden ist, um die Hitze, die von den Heizmitteln (5) erzeugt wird, in die Kochkammer (2) zu übertragen und zu strahlen, und Stütz- und Bewegungsmittel (7), die ausgebildet sind, die Grillmittel (50) und/oder die Spießmittel (70) zu stützen, umfasst, **dadurch gekennzeichnet, dass** die Trennwand (21) eine hintere Wand der Kochkammer (2) ist, die gegenüber der vorderen Zugriffsöffnung (8) liegt, wobei die Ventilationskammer (3) an der Rückseite der Kochkammer (2) in Bezug auf die vordere Zugriffsöffnung (8) angeordnet ist, und dadurch, dass die Stütz- und Bewegungsmittel (7) angeordnet sind, die Grillmittel (50) und/oder die Spießmittel (70) in einer kontinuierlichen Weise entlang einer Regulationsrichtung (R) in der Nähe oder entfernt von den keramischen Strahlmitteln (6) zu bewegen und die Grillmittel (50) und/oder die Spießmittel (70) um eine jeweilige transversale Drehachse (Z; Z') zu drehen, um das Kochen des Essens anzupassen und zu steuern.

2. Grillvorrichtung nach Anspruch 1, wobei die Stütz- und Bewegungsmittel (7) ein Paar Stützelemente (14), die gleitbar an gegenüberliegenden lateralen Wänden (25, 26) der Kochkammer (2) fixiert sind und angeordnet sind, einen Drehstab (53; 73) der Grillmittel (50) und/oder der Spießmittel (70) drehbar aufzunehmen, und erste Bewegungsmittel (31, 32), um die Stützelemente (14) entlang der Regulationsrichtung (R) zu bewegen, um die Grillmittel (50) und/oder die Spießmittel (70) nahe zu den keramischen Strahlmitteln (6) zu bewegen oder davon weg zu bewegen, umfassen.

3. Grillvorrichtung nach Anspruch 2, wobei jedes Stützelement (14) einen Bereich (14a) umfasst, der zu der Zugriffsöffnung (8) vorsteht und angeordnet ist, um ein jeweiliges Ende (53a, 53b; 73a, 73b) des Drehstabs (53; 73) in einem offenen Gehäusesitz (15) des Stützelements (14) aufzunehmen und zu führen.

4. Grillvorrichtung nach Anspruch 2 oder 3, wobei die Stütz- und Bewegungsmittel (7) einen ersten externen Bügel (33) umfassen, der an einem der Stützelemente (14) durch einen Schlitz fixiert ist, der an einer jeweiligen lateralen Wand (25) der Kochkammer (2) realisiert ist, und mit einem jeweiligen Knauf (38) versehen ist, um einem Benutzer zu ermöglichen, den ersten Bügel (33) und die Stützelemente (14) entlang der Regulationsrichtung (R) zu bewegen.

5. Grillvorrichtung nach einem der Ansprüche 2 bis 4, wobei die Stütz- und Bewegungsmittel (7) zweite Bewegungsmittel (17) umfassen, die ausgebildet sind, mit einem Ende (53a) des Drehstabs (53; 73) der Grillmittel (50) und/oder der Spießmittel (70) gekoppelt zu werden, um letztere um die transversale Achse (Z, Z') zu drehen, wobei insbesondere die zweiten Bewegungsmittel (17) mit einem von den zwei Stützelementen (14) verbunden sind.

6. Grillvorrichtung nach Anspruch 5, wenn er von Anspruch 4 abhängt, wobei der erste Bügel (33) die zweiten Bewegungsmittel (17) gleitbar stützt, die entlang einer Einführrichtung (T) zwischen einer Einführposition und einer rückwärtigen Position bewegbar sind, um mit dem Drehstab (53; 73) der Grillmittel (50) und/oder der Spießmittel (70) jeweils einzugreifen oder auszugreifen.

7. Grillvorrichtung nach Anspruch 5 oder 6, wobei die zweiten Bewegungsmittel (17) Antriebsmittel (24) umfassen, die insbesondere innerhalb eines entsprechenden Behältnisses (35) untergebracht sind und die angeordnet sind, eine Antriebsbuchse (36) anzutreiben, die angeordnet ist, um mit einem Ende (53a; 73a) des Drehstabs (53; 73) einzugreifen, wobei insbesondere die zweiten Bewegungsmittel (17) an einem zweiten Bügel (37) fixiert sind, der gleitbar mit einem ersten Bügel (33) verbunden ist, der an einem der Stützelemente (14) fixiert ist.

8. Grillvorrichtung nach einem der vorhergehenden Ansprüche, wobei die Trennwand (21) im Wesentlichen vertikal ist.

9. Grillvorrichtung nach einem der vorhergehenden Ansprüche, umfassend zumindest eine Ventilationsöffnung (22), die an der Trennwand (21) und/oder einer oberen Wand (3) der Kochkammer (2) realisiert ist, um zu ermöglichen, dass Kochdämpfe und Hitze daraus austreten können.

10. Grillvorrichtung nach einem der vorhergehenden Ansprüche, wobei die Kochkammer (2) eine untere Wand (24), eine obere Wand (23), ein Paar von gegenüberliegenden lateralen Wänden (25, 26) und eine vordere Wand (27) umfasst, wobei die untere Wand (24) zusammen mit der Trennwand (21), den lateralen Wänden (25, 26) und der vorderen Wand (27) eine Bodenschale (9) bildet, die ausgebildet ist, um Wasser und/oder Kochflüssigkeiten zu enthalten und mit einer Ablauföffnung (11) versehen ist, die von einem jeweiligen Stopfen (12) schließbar ist.

11. Grillvorrichtung nach einem der vorhergehenden Ansprüche, umfassend einen Temperatursensor (81), um eine Betriebstemperatur der Heizmittel (5) und/oder der keramischen Strahlmittel (6) zu detektieren und einen weiteren Temperatursensor (82), um eine Temperatur innerhalb der Kochkammer (2) zu detektieren.

12. Grillvorrichtung nach einem der vorhergehenden Ansprüche, umfassend Steuermittel (42, 43), um die Hitze, die von den Heizmitteln (5) erzeugt wird, anzupassen.

13. Grillvorrichtung nach einem der vorhergehenden Ansprüche, umfassend Zeiterfassungsmittel (46), um ein Anschalten und/oder Abschalten der Heizmittel (5) zu steuern, insbesondere um eine Kochzeit und/oder den Start des Kochprozesses zu definieren.

14. Grillvorrichtung nach einem der Ansprüche 5 bis 7, umfassend Zeiterfassungsmittel (46), um ein Aktivieren und/oder Deaktivieren der zweiten Bewegungsmittel (17) zu steuern.

15. Grillvorrichtung nach einem der vorhergehenden Ansprüche, wobei die Heizmittel (5) gasversorgte Brennmittel umfassen, die ausgebildet sind, durch Verbrennen des Gases Hitze zu erzeugen, wobei insbesondere die Gasbrennmittel (5) und die keramischen Strahlmittel (6) in eine glühende keramische Emissionseinheit integriert sind.

## Revendications

1. Barbecue pourvu de moyens de grill (50) et/ou de moyens de broche (70) pour cuire de la nourriture, comprenant une chambre de cuisson (2) sensiblement fermée et pourvue d'une ouverture d'accès avant (8) pouvant être fermée, au moins partiellement, au moyen d'une porte (10) et d'une chambre de ventilation (3) divisée par rapport à ladite chambre de cuisson (2) au moyen d'une paroi de division (21) de ladite chambre de cuisson (2), ladite chambre de ventilation (3) étant agencée pour loger des moyens chauffants (5) et raccordée à un environnement externe au moyen d'une pluralité d'ouvertures de dessus (29) pour laisser sortir au moins la chaleur de cuisson, ledit barbecue comprenant des moyens de rayonnement en céramique (6) insérés dans ladite paroi de division (21) et raccordés auxdits moyens chauffants (5) afin de transmettre et rayonner dans ladite chambre de cuisson (2) la chaleur générée par lesdits moyens chauffants (5) et des moyens de support et de déplacement (7) adaptés pour supporter lesdits moyens de grill (50) et/ou lesdits moyens de broche (70), **caractérisé en ce que** ladite paroi de division (21) est une paroi arrière de ladite chambre de cuisson (2) qui est opposée à ladite ouverture d'accès avant (8), ladite chambre de ventilation (3) étant agencée à l'arrière de ladite chambre de cuisson (2) par rapport à ladite ouverture d'accès avant (8), et **en ce que** lesdits moyens de support et de déplacement (7) sont agencés pour déplacer lesdits moyens de grill (50) et/ou lesdits moyens de broche (70) de manière continue suivant une direction de régulation (R), près ou loin desdits moyens de rayonnement en céramique (6), et pour faire tourner lesdits moyens de grill (50) et/ou lesdits moyens de broche (70) autour d'un axe de rotation transversal (Z ; Z') respectif afin de régler et commander la cuisson de la nourriture.

2. Barbecue selon la revendication 1, dans lequel lesdits moyens de support et de déplacement (7) comprennent une paire d'éléments de support (14) fixés de manière coulissante à des parois latérales opposées (25, 26) de ladite chambre de cuisson (2) et agencés pour recevoir en rotation une tige rotative (53 ; 73) desdits moyens de grill (50) et/ou desdits moyens de broche (70) et des premiers moyens de déplacement (31, 32) pour déplacer lesdits éléments de support (14) suivant ladite direction de régulation (R) afin d'approcher ou d'éloigner lesdits moyens de grill (50) et/ou lesdits moyens de broche (70) desdits/depuis lesdits moyens de rayonnement en céramique (6).

3. Barbecue selon la revendication 2, dans lequel chaque élément de support (14) comprend une portion (14a) faisant saillie vers ladite ouverture d'accès (8) et agencée pour recevoir et guider une extrémité (53a, 53b ; 73a, 73b) respective de ladite tige rotative (53 ; 73) dans un siège de logement ouvert (15) dudit élément de support (14).

4. Barbecue selon la revendication 2 ou 3, dans lequel lesdits moyens de support et de déplacement (7) comprennent une première console externe (33) fixée à l'un des éléments de support (14) à travers une fente réalisée sur une paroi latérale (25) respective de la chambre de cuisson (2) et pourvue d'un bouton (38) respectif pour permettre à un utilisateur de déplacer ladite première console (33) et lesdits éléments de support (14) suivant ladite direction de régulation (R).

5. Barbecue selon l'une quelconque des revendications 2 à 4, dans lequel lesdits moyens de support et de déplacement (7) comprennent des seconds moyens de déplacement (17) capables d'être accouplés à une extrémité (53a) de ladite tige rotative (53 ; 73) desdits moyens de grill (50) et/ou desdits moyens de broche (70) afin de faire tourner cette dernière autour dudit axe transversal (Z ; Z'), en particulier lesdits seconds moyens de déplacement (17) étant raccordés à l'un des deux éléments de support (14).

6. Barbecue selon la revendication 5, lorsqu'elle dépend de la revendication 4, dans lequel ladite première console (33) supporte en coulissement lesdits seconds moyens de déplacement (17) qui sont mobiles suivant une direction d'insertion (T) entre une position d'insertion et une position vers l'arrière afin de mettre en prise ou hors prise ladite tige rotative (53 ; 73) desdits moyens de grill (50) et/ou desdits moyens de broche (70), respectivement.

7. Barbecue selon la revendication 5 ou 6, dans lequel lesdits seconds moyens de déplacement (17) comprennent des moyens d'entraînement (24), contenus notamment à l'intérieur d'un carter (35) respectif, et agencés pour faire tourner une douille d'entraînement (36) agencée pour mettre en prise une extrémité (53a ; 73a) de ladite tige rotative (53 ; 73), notamment lesdits seconds moyens de déplacement (17) étant fixés à une seconde console (37) raccordée de manière coulissante à une première console (33) fixée à l'un des éléments de support (14).

8. Barbecue selon une quelconque revendication précédente, dans lequel ladite paroi de division (21) est sensiblement verticale.

9. Barbecue selon une quelconque revendication précédente, comprenant au moins une ouverture de ventilation (22) réalisée sur ladite paroi de division (21) et/ou une paroi de dessus (3) de ladite chambre de cuisson (2) afin de permettre la sortie de fumées de cuisson et de la chaleur de celle-ci.

10. Barbecue selon une quelconque revendication précédente, dans lequel ladite chambre de cuisson (2) comprend une paroi de dessous (24), une paroi de dessus (23), une paire de parois latérales opposées (25, 26) et une paroi avant (27), ladite paroi de dessous (24) en coopération avec ladite paroi de division (21), lesdites parois latérales (25, 26), et ladite paroi avant (27) formant un plateau de dessous (9) approprié pour contenir de l'eau et/ou des liquides de cuisson et pourvu d'une ouverture d'évacuation (11), pouvant être fermé par un bouchon (12) respectif.

11. Barbecue selon une quelconque revendication précédente, comprenant un capteur de température (81) pour détecter une température de fonctionnement desdits moyens chauffants (5) et/ou desdits moyens de rayonnement en céramique (6) et un capteur de température supplémentaire (82) pour détecter une température à l'intérieur de ladite chambre de cuisson (2).

12. Barbecue selon une quelconque revendication précédente, comprenant des moyens de commande (42, 43) pour régler la chaleur générée par lesdits moyens chauffants (5).

13. Barbecue selon une quelconque revendication précédente, comprenant des moyens de minuterie (46) pour commander la mise en marche et/ou l'arrêt desdits moyens chauffants (5), notamment pour définir un temps de cuisson et/ou le début du processus de cuisson.

14. Barbecue selon l'une quelconque des revendications 5 à 7, comprenant des moyens de minuterie (46) pour commander l'activation et/ou la désactivation desdits seconds moyens de déplacement (17).

15. Barbecue selon une quelconque revendication précédente, dans lequel lesdits moyens chauffants (5) comprennent des moyens de brûleur alimentés en gaz appropriés pour générer de la chaleur en brûlant ledit gaz, notamment lesdits moyens de brûleur au gaz (5) et lesdits moyens de rayonnement en céramique (6) étant intégrés dans une unité d'émission en céramique incandescente.
